(19) **Europäisches Patentamt / European Patent Office / Office européen des brevets**

(11) **EP 3 621 315 A1**

(12) **EUROPEAN PATENT APPLICATION**

(43) Date of publication:
**11.03.2020  Bulletin 2020/11**

(51) Int Cl.:
**H04R 25/00** (2006.01)

(21) Application number: **18193159.3**

(22) Date of filing: **07.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GN Hearing A/S**
**2750 Ballerup (DK)**

(72) Inventors:
• **DIERKS, Søren**
**DK-2750 Ballerup (DK)**
• **HAASTRUP, Astrid**
**DK-2750 Ballerup (DK)**
• **KRISTENSEN, Denise De Leeuw**
**DK-2750 Ballerup (DK)**

(74) Representative: **Aera A/S**
**Gammel Kongevej 60, 18th floor**
**1850 Frederiksberg C (DK)**

(54) **METHODS FOR OPERATING HEARING DEVICE PROCESSING BASED ON ENVIRONMENT AND RELATED HEARING DEVICES**

(57)    This disclosure provides a method, performed in a hearing device, for operating the hearing device. The method comprises: obtaining an environment parameter; determining whether the environment parameter satisfies one or more first criteria, in accordance with the environment parameter satisfying the one or more first criteria, obtaining a processing context parameter; selecting a first hearing processing scheme based on the processing context parameter; and applying the selected first hearing processing scheme to input signals of the hearing device.

**Fig. 1**

EP 3 621 315 A1

## Description

The present disclosure relates to methods for operating hearing device processing based on environment and related hearing devices.

## BACKGROUND

The acoustic conditions surrounding a hearing device are often affected by various sound sources, which may vary in time and space. Examples of sound sources include noise sources which are for example present over a longer period of time, specific to a given location, more frequent during certain times of the day. Examples of sound sources include speech sources for one or more individuals, and/or sound sources from one or more devices.

## SUMMARY

Accordingly, there is a need for methods for operating a hearing device and related hearing devices, which are capable of adapting the hearing device processing to the conditions present in the environment including taking into account which sound source is desirable and which sound source is not desirable.

This disclosure provides a method, performed in a hearing device, for operating the hearing device. The method comprises: obtaining an environment parameter; determining whether the environment parameter satisfies one or more first criteria, in accordance with the environment parameter satisfying the one or more first criteria, obtaining a processing context parameter; selecting a first hearing processing scheme based on the processing context parameter; and applying the selected first hearing processing scheme to input signals of the hearing device.

A hearing device is disclosed, the hearing device comprising a memory, an interface, a processor configured to compensate for hearing loss, a receiver, and one or more microphones. The hearing device is configured to perform any of the methods disclosed herein.

The present disclosure provides methods and hearing devices that enable an optimization of the hearing processing by exploiting environment information that may have been collected by one or more users. It may be advantageous for any hearing device user to be able to control the hearing device according to the present disclosure so as to leapfrog to active noise cancellation which have been previously applied to pre-recorded noises for a given environment, e.g. location and/or time. The present disclosure may be particularly advantageous for prioritizing speech signals from a targeted person, and/or in certain locations or location types, voices of certain selected persons, e.g. by in amplification beyond other sounds in the acoustic environment, and/or in certain locations or location types, to indicate events, e.g. related to critical information (e.g. of dangers, e.g. fire alarm, gas alarm) or related to an action (e.g. door bell ringing, mail arrived) - which can be specific to the location or location type.

## BRIEF DESCRIPTION OF THE DRAWINGS

The above and other features and advantages of the present invention will become readily apparent to those skilled in the art by the following detailed description of exemplary embodiments thereof with reference to the attached drawings, in which:

Fig. 1 schematically illustrates an exemplary hearing device, and

Figs. 2A-B schematically illustrates an exemplary method according to this disclosure.

## DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

A hearing device performance often depends on the environment in the vicinity of the hearing e.g. on the various sound sources, which may vary in time and space. Examples of sound sources include noise sources which are for example present over a longer period of time, specific to a given location, more frequent during certain times of the day. Examples of sound sources include speech sources for one or more individuals, sound sources from one or more devices. Some sound sources may be considered undesired and other sound sources may be considered as desired sources. A sound source may be considered desired at a certain time and undesired at another time.

For example, in an office environment, a sound source may include a printer, other colleagues' keyboards. For example, at home the dishwasher makes noise, going/walking to work traffic noise disturbs you, at work the clicking of your colleague's keyboard is not desired at times.

It may be advantageous for any hearing device user to be able to control the hearing device according to the present disclosure so as to leapfrog to active noise cancellation which have been previously applied to pre-recorded signals for a given environment, e.g. location and/or time.

For example, children suffering from hearing loss need to hear at least 30.000 words, each day for them to be able to develop speech. It has been found that hearing the voice of any of the parents, siblings and significant caregivers is particularly important in the development of speech for the children. The present disclosure provides methods and hearing devices that enable the prioritization of voices, (i.e. of speech signals), which would be particularly advantageous for prioritizing speech signals from the parents, siblings and significant caregivers so as to improve the development of speech for hearing-impaired children.

It may be advantageous for any hearing device user to be able to control the hearing device according to the present disclosure so as to prioritize, in certain locations or location types, voices of certain selected persons, e.g. by in amplification beyond other sounds in the acoustic environment.

It may be advantageous for any hearing device user to be able to control the hearing device according to the present disclosure so as to prioritize, in certain locations or location types, signals indicative of events, e.g. related to critical information (e.g. of dangers, e.g. fire alarm, gas alarm) or related to an action (e.g. door bell ringing, mail arrived) - which can be specific to the location or location type. It is advantageous for any hearing aid user to be able to hear such sound signals loud and clear.

This disclosure provides a method, performed in a hearing device, for operating the hearing device. The method comprises: obtaining an environment parameter; determining whether the environment parameter satisfies one or more first criteria, in accordance with the environment parameter satisfying the one or more first criteria, obtaining a processing context parameter; selecting a first hearing processing scheme based on the processing context parameter; and applying the selected first hearing processing scheme to input signals of the hearing device.

A processing context parameter refers herein to a parameter which indicative of a context of an environment where the hearing device is operating, and which indicates a processing scheme to be (preferably) used in the environment so as to e.g. properly reduce noise, to properly compress, and/or to properly prioritize input signals.

The method comprises obtaining the environment parameter, e.g. from an accessory device. The environment parameter may comprise a location parameter and/or an environment type parameter. The location parameter may be indicative of a location of the hearing device. The environment type parameter may be indicative of a type of environment or a type of location. The environment type or location type may be indicative of one or more of: indoor location type, outdoor location type, train station type, airport type, a concert hall type, a school type, a classroom type, a vehicular type (e.g. indicative of whether the hearing device is located in a vehicle, such as a train, car, bicycle in motion.).

Obtaining the environment parameter may comprise receiving a wireless input signal, and determining the environment parameter based on the wireless input signal. For example, receiving a wireless input signal from a wireless local area network may be indicative of a location parameter (e.g. of the location being home, office, school, restaurant), or of an environment type parameter (e.g. of indoor location type, airport type, a concert hall type, a school type, a classroom type). For example, receiving a wireless localization input signal from a wireless navigation network (e.g. GPS) may be indicative of a location parameter (e.g. of the location being home, office, school, restaurant, e.g. of the location information (e.g. geographic coordinates)), or of an environment type parameter (e.g. of indoor location type, airport type, a concert hall type, a school type, a classroom type, a vehicular type). For example, receiving a wireless input signal from a short-range wireless system (e.g. Bluetooth) may be indicative of a location parameter (e.g. of the location being home, office, school), or of an environment type parameter (e.g. of indoor location type, a vehicular type (e.g. when the vehicle transmits short-range wireless input signals)). In one or more exemplary methods, the accessory device is configured to receive a wireless input signal (e.g. a wireless input signal from a wireless local area network indicative of a location parameter (e.g. of the location being home, office, school, restaurant), or of an environment type parameter (e.g. of indoor location type, airport type, a concert hall type, a school type, a classroom type); a wireless localization input signal from a wireless navigation network (e.g. GPS) indicative of a location parameter (e.g. of the location being home, office, school, restaurant, e.g. of the location information (e.g. geographic coordinates)), or of an environment type parameter (e.g. of indoor location type, airport type, a concert hall type, a school type, a classroom type, a vehicular type); a wireless input signal from a short-range wireless system (e.g. Bluetooth) indicative of a location parameter (e.g. of the location being home, office, school), or of an environment type parameter (e.g. of indoor location type, a vehicular type (e.g. when the vehicle transmits short-range wireless input signals))), to determine the environment parameter based on the wireless input signal, and to provide (e.g. to transmit) the determined environment parameter to the hearing device.

The one or more first criteria may comprise a location criterion. Determining whether the environment parameter satisfies the one or more first criteria may comprise determining whether the environment parameter satisfies the location criterion.

Determining whether the environment parameter satisfies the location criterion may comprise determining whether the environment parameter is indicative of a location that is comprised in a geographic area present in a hearing processing database.

The hearing processing database may refer to a database comprising one or more of: a set of hearing processing scheme identifiers, one or more sets of sound signals (e.g. output signals for provision by a receiver of the hearing device), corresponding timestamps. The hearing processing database can be envisaged to include a hearing processing library, such as a hearing processing collection, such as a hearing processing map. The hearing processing database may be stored on one or more of: a memory unit of the hearing device memory, an accessory device coupled to hearing device, or a remote storage mean from which the processing context parameter is retrievable upon request from the hearing device and/or the accessory device.

Determining whether the environment parameter is indicative of a location that is comprised in a geographic area present in a hearing processing database may comprise transmitting a request comprising the environment parameter to a remotely located hearing processing database and receiving a response comprising an indication on whether the environment parameter is indicative of a location that is comprised in a geographic area present in the hearing processing database, and optionally a processing context parameter when the environment parameter is indicative of a location that is comprised in a geographic area present in the hearing processing database.

The one or more first criteria may comprise a time criterion. The time criterion may comprise a time period. Determining whether the environment parameter satisfies the one or more first criteria may comprise determining whether the environment parameter satisfies the time criterion by determining whether the environment parameter is indicative of a location that has been created and/or updated within the time period of the time criterion. In accordance with the determination that the environment parameter is indicative of a location that has been created and/or updated beyond the time period of the time criterion, it is determined that the environment parameter does not satisfies the time criterion, and thereby does not satisfy the one or more first criteria.

The method may comprise obtaining one or more input signals., e.g. via one or more microphones of the hearing device and/or via the interface of the hearing device (e.g. via a wireless interface of the hearing device). An input signal may comprise microphone input signal and/or a wireless input signal (e.g. a wireless streaming signal). Obtaining one or more input signals may comprise obtaining one or more input signals from the acoustic environment (e.g. via the one or more microphones) or from an external device configured to communicate with the hearing device via the interface.

The method may comprise, in accordance with the environment parameter not satisfying the one or more first criteria, recording at least a part of the one or more input signals. For example, in accordance with the environment parameter not satisfying the location criterion and/or the time criterion, the method may comprise recording at least a part of the one or more input signals, such as the at least a part of the one or more input signals obtained via the one or more microphones of the hearing device. Recording at least a part of the one or more input signals may comprise storing, e.g. in the memory, the at least a part of the one or more input signals. The method may comprise, in accordance with the environment parameter not satisfying the one or more first criteria, recording at least a part of the one or more input signals and optionally reporting to the hearing processing database

The method may comprise: in accordance with the environment parameter not satisfying the one or more first criteria, storing at least a part of the one or more input signals and/or one or more parameters characterising at least a part of the one or more input signals. The method may comprise: in accordance with the environment parameter not satisfying the one or more first criteria, generating one or more parameters characterising at least a part of the one or more input signals and storing the one or more parameters, e.g. on the memory unit of the hearing device, and/or on a remote storage mean related to the accessory device couples with the hearing device. The one or more parameters may comprise one or more of features characterising at least a part of the one or more input signals in the frequency domain, in the time domain. The one or more features may comprise a frequency, a frequency system, an amplitude, a phase, and/or a modulation. The one or more parameters may comprise a compressed version of any one or more signals of the at least part of the one or more input signals.

The method may comprise: in accordance with the environment parameter not satisfying at least one of the one or more first criteria, determining a noise parameter based on at least a part of the one or more of input signals, selecting a second hearing processing scheme based on the noise parameter; and applying the second hearing processing scheme to input signals. The noise parameter may comprise a signal to noise ratio, a signal to interference plus noise ratio, a noise spectrum, and/or a noise distribution across a frequency spectrum. The second hearing processing scheme may be different from the first hearing processing scheme.

The environment parameter not satisfying at least one of the one or more first criteria may comprise the environment parameter not satisfying the location criterion, and/or the time criterion. For example, the method may comprise: in accordance with the environment parameter not satisfying the location criterion and/or the time criterion, determining a noise parameter based on at least a part of the one or more of input signals, selecting a second hearing processing scheme based on the noise parameter; and applying the second hearing processing scheme to input signals.

The first hearing processing scheme may comprise a noise cancellation scheme, and/or an input signal prioritization scheme. A noise cancellation scheme may refer to a processing scheme that is configured to be applied to an input signal to mitigate and/or cancel a noise component of the input signal, and to provide an output signal for a receiver of the hearing device to emit. An input signal prioritization scheme may refer to a processing scheme that is configured to be applied to an input signal to prioritize or not the provision of the input signal to the receiver of the hearing device for emission. An input signal prioritization scheme may comprise a beamforming scheme, an amplification, and/or a compression scheme.. An input signal prioritization scheme may comprise an output signal prioritization configured to prioritize which signal the hearing device should output in a priority order.

The input signal prioritization scheme may be configured to identify a voice based on the one or more input signals obtained by the hearing device and to associate the identified voice to a specific person. For example, a hearing device of a student may be capable of identifying a voice of a teacher and prioritizing the voice according to an input prioritization scheme obtained using the processing context parameter characterizing a school environment according to this disclosure. For example, a hearing device of a child may be capable of identifying the voice of a parent and prioritizing the voice according to an input prioritization scheme obtained using the processing context parameter characterizing a home environment according to this disclosure.

The input signal prioritization scheme may be configured to identify a voice based on the one or more input signals obtained by the hearing device by applying a blind source separation scheme.

In an example where the disclosed technique is applied and where N sound sources have been mixed into M microphones of the hearing device, it is assumed that the hearing processing (e.g. mixing processing) is linear and coefficient of the linear hearing processing is unknown (also referred to as the 'blind' part).

The input signals expressed as vector $x$ obtained via the one or more microphones of the hearing device may be expressed e.g.:

$$x = A * s + n \quad (1)$$

where $s$ denotes the sound source vector, $n$ denotes noise observations. $A, s,$ and $n$ represent unknown variables.

Applying a blind source separation scheme comprises in this example applying the linear un-mixing scheme to the input signals received from the one or more sound sources, the following sound source vector estimate $\hat{s}$ may be obtained by e.g.:

$$\hat{s} = W * x = s + W * n \quad (2)$$

where W denotes an unmixing matrix.

Applying the linear un-mixing scheme may comprise estimating an un-mixing matrix W, e.g. by applying assumptions on the unknown variable $s,$ e.g. one or more of the following assumptions:

The sound sources (or the random variables representative of the input signals obtained from the sound sources) are assumed to be uncorrelated; and/or

The sound sources (or the random variables representative of the input signals obtained from the sound sources) are assumed to be statistically independent, whereby an independent component analysis may be applied; and/or

The sound sources (or the random variables representative of the input signals obtained from the sound sources) are assumed to be non-stationary.

The sound sources (or the random variables representative of the input signals obtained from the sound sources) may also be assumed to be independent and identically distributed.

When the sound sources (or the random variables representative of the input signals obtained from the sound sources) are assumed to be uncorrelated and non-stationary, estimating an un-mixing matrix W may be performed by applying a convolutive blind source separation scheme, such as the convolutive blind source separation of non-stationary sources published by Para and Spence.

The input signal may comprise speech component and a noise component. The estimating of an un-mixing matrix W may be based on assumptions regarding the speech properties (e.g. speech signal distribution), and/or on assumptions regarding the noise (e.g. noise distribution).

The noise distribution may be assumed to be independent and identically distributed. The noise distribution may be assumed to be based on noise dependent dictionaries obtained by non-negative matrix factorization.

The speech distribution may be assumed to be independent and identically distributed. The speech distribution may be assumed to be based on noise dependent dictionaries obtained by non-negative matrix factorization.

The first hearing processing scheme may comprise a noise cancellation scheme selected based on the processing context parameter, and/or an input signal prioritization scheme selected based on the processing context parameter.

The first hearing processing scheme may comprise a noise cancellation scheme tailored or customized based on the environment parameter (so as to adapt the hearing processing to the environment of the hearing device), and/or an input signal prioritization scheme selected based on the processing context parameter tailored or customized based on the environment parameter (so as to adapt the hearing processing to the environment of the hearing device).

Obtaining the environment parameter may comprise obtaining an input signal and determining the environment parameter based on the input signal. For example, the input signal may comprise a wireless communication signal indicative of an environment, e.g. a WLAN signal indicative of an environment (e.g. office, restaurant, train station, school, hotel, hotel lobby); and/or a sound signal (e.g. indicative of outdoor or indoor environment).

The method may comprise classifying the one or more input signals based on the environment parameter.

The method comprises in accordance with the environment parameter satisfying the one or more first criteria, obtaining a processing context parameter, and selecting a first hearing processing scheme based on the processing context parameter. The processing context parameter may refer to a parameter indicative of a hearing processing context to be used by the hearing device, such as indicative of the hearing processing scheme to be applied. The processing context parameter may reflect user preferences in terms of the desirability of sound sources with respect to the environment parameter. Obtaining the processing context parameter may comprise receiving and/or retrieving the processing context parameter based on the environment parameter, e.g. from a memory unit of the hearing device, from an accessory device paired with the hearing device, from a server configured to connect to the hearing device.

The processing context parameter may comprise a noise cancellation scheme identifier, and/or a prioritization scheme identifier, and/or one or more output signal indicators indicative of one or more output signals to be output by the hearing device. A noise cancellation scheme identifier may refer to an identifier uniquely identifying a noise cancellation scheme. A prioritization scheme identifier may refer to an identifier uniquely identifying a prioritization scheme. The one or more output indicators are indicative of one or more output signals (e.g. an alert sound, an alarm sound, a streamed signal) to be output by the hearing device, such as by the receiver.

A hearing device is disclosed. The hearing device may be a hearable or a hearing aid, wherein the processor is configured to compensate for a hearing loss of a user.

The hearing device may be of the behind-the-ear (BTE) type, in-the-ear (ITE) type, in-the-canal (ITC) type, receiver-in-canal (RIC) type or receiver-in-the-ear (RITE) type. The hearing aid may be a binaural hearing aid. The hearing device may comprise a first earpiece and a second earpiece, wherein the first earpiece and/or the second earpiece is an earpiece as disclosed herein.

The hearing device comprises a memory, an interface, a processor configured to compensate for hearing loss, a receiver, and one or more microphones. The hearing device is configured to perform any of the methods disclosed herein. The processor is configured to perform any of the methods disclosed herein.

The hearing device comprises an antenna for converting one or more wireless input signals, e.g. a first wireless input signal and/or a second wireless input signal, to an antenna output signal. The wireless input signal(s) origin from external source(s), such as spouse microphone device(s), wireless TV audio transmitter, an accessory device coupled with the hearing device and/or a distributed microphone array associated with a wireless transmitter.

The hearing device comprises a radio transceiver coupled to the antenna for converting the antenna output signal to a transceiver input signal. Wireless signals from different external sources may be multiplexed in the radio transceiver to a transceiver input signal or provided as separate transceiver input signals on separate transceiver output terminals of the radio transceiver. The hearing device may comprise a plurality of antennas and/or an antenna may be configured to be operate in one or a plurality of antenna modes. The transceiver input signal comprises a first transceiver input signal representative of the first wireless signal from a first external source.

The hearing device comprises a set of microphones. The set of microphones may comprise one or more microphones. The set of microphones comprises a first microphone for provision of a first microphone input signal and/or a second microphone for provision of a second microphone input signal. The set of microphones may comprise N microphones for provision of N microphone signals, wherein N is an integer in the range from 1 to 10. In one or more exemplary hearing devices, the number N of microphones is two, three, four, five or more. The set of microphones may comprise a third microphone for provision of a third microphone input signal.

The hearing device comprises a processor for processing input signals, such as input signal, such as microphone input signal(s), such as pre-processed input signals, such as wireless input signals. The processor provides an electrical output signal based on the input signals to the receiver.

The processor is configured to obtain an environment parameter, e.g. from the memory unit and/or via the interface, e.g. from an accessory device coupled with the hearing device, and/or from a server. The interface may be configured to obtain an environment parameter, e.g. from an accessory device coupled with the hearing device, and/or from a server.

The hearing device may comprise a pre-processing unit configured to determine whether the environment parameter satisfies one or more first criteria. The pre-processing unit may be configured to, in accordance with the environment parameter satisfying the one or more first criteria, obtain a processing context parameter, e.g. from the memory unit, and/or from a hearing processing database stored remotely on a server and/or on the accessory device. The pre-processing unit may be configured to provide processing context parameter to the processor. The processor is configured to select a first hearing processing scheme based on the processing context parameter; and apply the selected first hearing processing scheme to input signals of the hearing device.

The processed input signals may be provided by the processor to the receiver configured to output the signals into ear canal of the user.

The figures are schematic and simplified for clarity, and they merely show details which are essential to the understanding of the invention, while other details have been left out. Throughout, the same reference numerals are used for identical or corresponding parts.

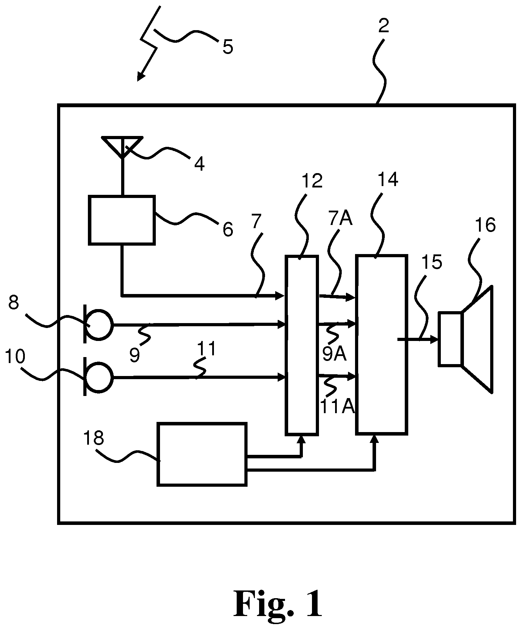

Fig. 1 is a block diagram of an exemplary hearing device according to the invention. The hearing device 2 comprises an antenna 4 for converting a first wireless input signal 5 of a first external source (not shown in Fig. 1, e.g. an accessory device) to an antenna output signal. The hearing device 2 comprises a radio transceiver 6 coupled to the antenna 4 for providing a transceiver input signal 7 and a set of microphones comprising a first microphone 8 and optionally a second microphone 10 for provision of respective first microphone input signal 9 and second microphone input signal 11.

The hearing device 2 optionally comprises a pre-processing unit 12 connected to the radio transceiver 6, the first microphone 8 and the second microphone 10 for receiving and pre-processing the transceiver input signal(s) 7, the first microphone input signal 9 and the second microphone input signal 11. The pre-processing unit 12 is configured to pre-process the input signals 7, 9, 11 and provide pre-processed input signals as output to the processor 14.

The hearing device 2 may comprise a memory unit 18.

The hearing device 2 may comprise a pre-processing unit 12 configured to configured to obtain an environment parameter, e.g. from a memory unit 18 and/or via a interface (e.g. radio transceiver 6), e.g. from an accessory device coupled with the hearing device, and/or from a server. The interface 20 may be configured to obtain an environment parameter, e.g. from an accessory device coupled with the hearing device 2, and/or from a server.

The hearing device 2 may comprise a pre-processing unit 12 configured to determine whether the environment parameter satisfies one or more first criteria. The pre-processing unit 12 may be configured to, in accordance with the environment parameter satisfying the one or more first criteria, obtain a processing context parameter, e.g. from the memory unit 18, and/or from a hearing processing database stored remotely on a server and/or on the accessory device. The pre-processing unit 12 may be configured to provide processing context parameter to the processor 14. The processor 14 is configured to select a first hearing processing scheme based on the processing context parameter; and apply the selected first hearing processing scheme to input signals of the hearing device 2.

The hearing device 2 comprises a processor 14 connected to the pre-processing unit 12 for receiving and processing pre-processed input signals comprising one or more pre-processed transceiver input signals 7A, pre-processed first microphone input signal 9A and pre-processed second microphone input signal 11A.

A receiver 16 converts the electrical output signal 15 to an audio output signal to be directed towards an eardrum of the hearing device user.

The processed input signals may be provided by the processor 14 to the receiver 16 configured to output the signals into ear canal of the user.

The processor 14 is configured to compensate for a hearing loss of a user and to provide an electrical output signal 15 based on input signals 7A, 9A, 11A.

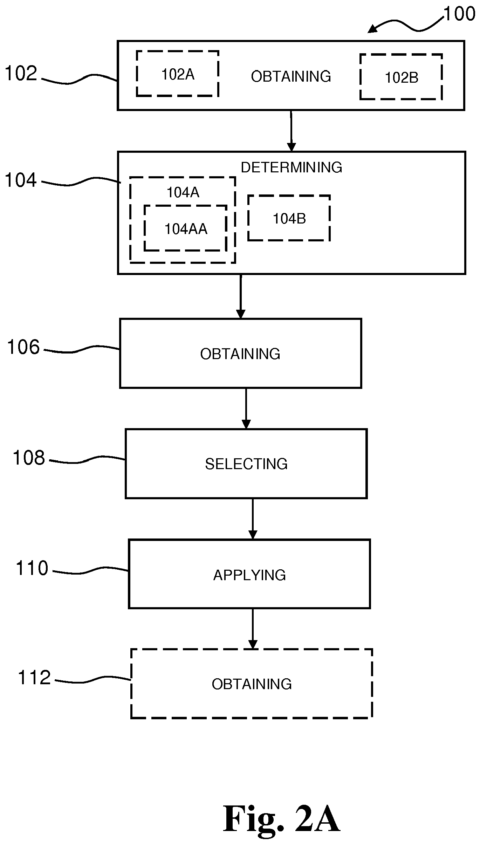

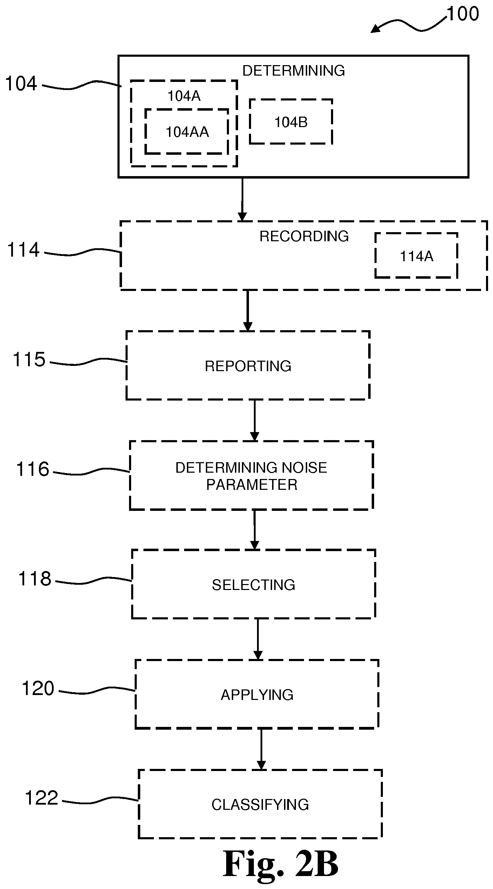

Figs. 2A-2B are flow diagrams of an exemplary method 100 of operating a hearing device according to this disclosure. The method 100 is performed in a hearing device for operating the hearing device.

The method 100 comprises: obtaining 102 an environment parameter, e.g. from an accessory device configured to connect or pair with the hearing device. The environment parameter may comprise a location parameter and/or an environment type parameter. The location parameter may be indicative of a location of the hearing device. The environment type parameter may be indicative of a type of environment or a type of location. The environment type or location type may be indicative of one or more of: indoor location type, outdoor location type, train station type, airport type, a concert hall type, a school type, a classroom type, a vehicular type (e.g. indicative of whether the hearing device is located in a vehicle, such as a train, car, bicycle in motion.).

Obtaining 102 the environment parameter may comprise receiving a wireless input signal, and determining the environment parameter based on the wireless input signal. For example, receiving a wireless input signal from a wireless local area network may be indicative of a location parameter (e.g. of the location being home, office, school, restaurant), or of an environment type parameter (e.g. of indoor location type, airport type, a concert hall type, a school type, a classroom type). For example, receiving a wireless localization input signal from a wireless navigation network (e.g. GPS) may be indicative of a location parameter (e.g. of the location being home, office, school, restaurant, e.g. of the location information (e.g. geographic coordinates)), or of an environment type parameter (e.g. of indoor location type, airport type, a concert hall type, a school type, a classroom type, a vehicular type). For example, receiving a wireless input signal from a short-range wireless system (e.g. Bluetooth) may be indicative of a location parameter (e.g. of the location being home, office, school), or of an environment type parameter (e.g. of indoor location type, a vehicular type (e.g. when the vehicle transmits short-range wireless input signals)).

In one or more exemplary methods, the accessory device is configured to receive a wireless input signal (e.g. a wireless input signal from a wireless local area network indicative of a location parameter (e.g. of the location being home, office, school, restaurant), or of an environment type parameter (e.g. of indoor location type, airport type, a concert hall type, a school type, a classroom type); a wireless localization input signal from a wireless navigation network (e.g. GPS) indicative of a location parameter (e.g. of the location being home, office, school, restaurant, e.g. of the location information (e.g. geographic coordinates)), or of an environment type parameter (e.g. of indoor location type, airport type, a concert hall type, a school type, a classroom type, a vehicular type); a wireless input signal from a short-range wireless system (e.g. Bluetooth) indicative of a location parameter (e.g. of the location being home, office, school), or of an environment type parameter (e.g. of indoor location type, a vehicular type (e.g. when the vehicle transmits short-range wireless input signals))), to determine the environment parameter based on the wireless input signal, and to provide (e.g. to transmit) the determined environment parameter to the hearing device. Obtaining 102 the environment parameter may comprise receiving the environment parameter from the accessory device, e.g. via a message to the hearing device, e.g. a wireless input signal from the accessory device to the hearing device.

The method 100 comprises determining 104 whether the environment parameter satisfies one or more first criteria. The one or more first criteria may comprise a location criterion. The one or more first criteria may comprise a time criterion. The time criterion may comprise a time period.

Determining 104 whether the environment parameter satisfies the one or more first criteria may comprise determining 104A whether the environment parameter satisfies the location criterion. Determining 104A whether the environment parameter satisfies the location criterion may comprise determining 104AA whether the environment parameter is indicative of a location that is comprised in a geographic area present in a hearing processing database (e.g. a database comprising one or more of the following data which are categorized or indexed by environment parameter: a set of hearing processing scheme identifiers, one or more sets of sound signals (e.g. output signals for provision by a receiver of the hearing device), corresponding timestamps, a hearing processing library, a hearing processing collection, and a hearing processing map). The hearing processing database may be stored on one or more of: a memory unit of the hearing device memory, an accessory device coupled to hearing device, or a remote storage mean from which the processing context parameter is retrievable upon request from the hearing device (e.g. hearing device 2) and/or the accessory device based on the environment parameter.

Determining 104AA whether the environment parameter is indicative of a location that is comprised in a geographic area present in a hearing processing database may comprise transmitting a request comprising the environment parameter to a remotely located hearing processing database and receiving a response comprising an indication on whether the environment parameter is indicative of a location that is comprised in a geographic area present in the hearing processing database, and optionally a processing context parameter when the environment parameter is indicative of a location that is comprised in a geographic area present in the hearing processing database.

Determining 104 whether the environment parameter satisfies the one or more first criteria may comprise determining 104B whether the environment parameter satisfies the time criterion. Determining 104B whether the environment parameter satisfies the time criterion may comprise determining whether the environment parameter is indicative of a location that has been created and/or updated within the time period of the time criterion. For example, in accordance with the determination that the environment parameter is indicative of a location that has been created and/or updated beyond the time period of the time criterion, it is determined that the environment parameter does not satisfies the time criterion, and thereby does not satisfy the one or more first criteria.

The method 100 comprises, in accordance with the environment parameter satisfying the one or more first criteria, obtaining 106 a processing context parameter. The method 100 comprises selecting 108 a first hearing processing scheme based on the processing context parameter. The method 100 comprises applying 110 the selected first hearing processing scheme to input signals of the hearing device.

The method 100 may comprise obtaining 112 one or more input signals, via one or more microphones of the hearing device and/or via the interface of the hearing device (e.g. via a wireless interface of the hearing device). An input signal may comprise microphone input signal and/or a wireless input signal (e.g. a wireless streaming signal). Obtaining 112 one or more input signals may comprise obtaining one or more input signals from the acoustic environment (e.g. via the one or more microphones) or from an external device (e.g. a spouse microphone, and/or an accessory device (e.g. a mobile device coupled with the hearing device)) configured to communicate with the hearing device via the interface.

Obtaining 102 the environment parameter may comprise obtaining 102A an input signal and determining 102B the environment parameter based on the input signal, e.g. based on a wireless communication signal and/or a sound signal.

The method 100 may comprise, in accordance with the environment parameter not satisfying the one or more first criteria, recording 114 at least a part of the one or more input signals. For example, in accordance with the environment parameter not satisfying the location criterion and/or the time criterion, recording 114 at least a part of the one or more input signals comprises recording the at least a part of the one or more input signals obtained via the one or more microphones of the hearing device.

Recording 114 at least a part of the one or more input signals may comprise storing 114A the at least a part of the one or more input signals. The method may comprise, in accordance with the environment parameter not satisfying the one or more first criteria, reporting 115 to the hearing processing database after recording 114.

The method 100 may comprise: in accordance with the environment parameter not satisfying the one or more first criteria, storing 114A at least a part of the one or more input signals and/or one or more parameters characterising at least a part of the one or more input signals. Storing 114A may comprise: in accordance with the environment parameter not satisfying the one or more first criteria, generating one or more parameters characterising at least a part of the one or more input signals and storing the one or more parameters, e.g. on the memory unit of the hearing device, and/or on a remote storage mean related to the accessory device couples with the hearing device. The one or more parameters may comprise one or more of features characterising at least a part of the one or more input signals in the frequency domain, in the time domain. The one or more features may comprise a frequency, a frequency system, an amplitude, a phase, and/or a modulation. The one or more parameters may comprise a compressed version of any one or more signals of the at least part of the one or more input signals.

The method 100 may comprise: in accordance with the environment parameter not satisfying at least one of the one or more first criteria, determining 116 a noise parameter based on at least a part of the one or more of input signals, selecting 118 a second hearing processing scheme based on the noise parameter; and applying 120 the second hearing processing scheme to input signals. Determining 116 a noise parameter based on at least a part of the one or more of input signals may comprise determining one or more of: a signal to noise ratio, a signal to interference plus noise ratio, a noise spectrum, and/or a noise distribution across a frequency spectrum. The second hearing processing scheme may be different from the first hearing processing scheme.

In one or more exemplary methods, the environment parameter not satisfying at least one of the one or more first criteria may comprise the environment parameter not satisfying the location criterion, and/or the time criterion. For example, the method 100 may comprise: in accordance with the environment parameter not satisfying the location criterion and/or the time criterion, determining 116 a noise parameter based on at least a part of the one or more of input signals, selecting 118 a second hearing processing scheme based on the noise parameter; and applying 120 the second hearing processing scheme to input signals.

The first hearing processing scheme may comprise a noise cancellation scheme configured to be applied to an input signal to mitigate and/or cancel a noise component of the input signal, and to provide an output signal for a receiver of the hearing device to emit. Applying 110 the first hearing processing scheme may comprise applying a noise cancellation scheme.

The first hearing processing scheme may comprise an input signal prioritization scheme configured to be applied to an input signal to prioritize or not the provision of the input signal to the receiver of the hearing device for emission. An input signal prioritization scheme may comprise a beamforming scheme, an amplification, and/or a compression scheme. Applying 110 the first hearing processing scheme may comprise an input signal prioritization scheme. The input signal prioritization scheme may be configured to identify a voice based on the one or more input signals obtained by the hearing device and to associate the identified voice to a specific person (e.g. a parent, a family member, a teacher). The input signal prioritization scheme may be configured to identify a voice based on the one or more input signals obtained by the hearing device by applying a blind source separation scheme.

In an example where the disclosed technique is applied and where N sound sources have been mixed into M microphones of the hearing device, it is assumed that the hearing processing (e.g. mixing processing) is linear and coefficient of the linear hearing processing is unknown (also referred to as the 'blind' part). The input signals expressed as vector *x* obtained via the one or more microphones of the hearing device may be expressed e.g.:

$$x = A * s + n \quad (1)$$

where *s* denotes the sound source vector, *n* denotes noise observations. *A, s,* and *n* represent unknown variables. Applying 110 the first hearing processing scheme may comprise applying a blind source separation scheme. Applying the blind source separation scheme comprises in this example applying the linear un-mixing scheme to the input signals received from the one or more sound sources, the following sound source vector estimate $\hat{s}$ may be obtained by e.g.:

$$\hat{s} = W * x = s + W * n \quad (2)$$

where W denotes an un-mixing matrix. Applying the linear un-mixing scheme may comprise estimating an un-mixing matrix W, e.g. by applying assumptions on the unknown variable *s,* e.g. one or more of the following assumptions:

The sound sources (or the random variables representative of the input signals obtained from the sound sources) are assumed to be uncorrelated; and/or

The sound sources (or the random variables representative of the input signals obtained from the sound sources) are assumed to be statistically independent, whereby an independent component analysis may be applied; and/or

The sound sources (or the random variables representative of the input signals obtained from the sound sources) are assumed to be non-stationary.

The sound sources (or the random variables representative of the input signals obtained from the sound sources) may also be assumed to be independent and identically distributed. When the sound sources (or the random variables representative of the input signals obtained from the sound sources) are assumed to be uncorrelated and non-stationary, estimating an un-mixing matrix W may be performed by applying a convolutive blind source separation scheme, such as the convolutive blind source separation of non-stationary sources published by Para and Spence. The input signal may comprise speech component and a noise component. The estimating of an un-mixing matrix W may be based on assumptions regarding the speech properties (e.g. speech signal distribution), and/or on assumptions regarding the noise (e.g. noise distribution). The noise distribution may be assumed to be independent and identically distributed. The noise distribution may be assumed to be based on noise dependent dictionaries obtained by non-negative matrix factorization. The speech distribution may be assumed to be independent and identically distributed. The speech distribution may be assumed to be based on noise dependent dictionaries obtained by non-negative matrix factorization.

The first hearing processing scheme may comprise a noise cancellation scheme selected based on the processing context parameter, and/or an input signal prioritization scheme selected based on the processing context parameter. The first hearing processing scheme may comprise a noise cancellation scheme selected based on the processing context parameter tailored or customized based on the environment parameter (so as to adapt the hearing processing to the environment or context of the hearing device), and/or an input signal prioritization scheme selected based on the processing context parameter tailored or customized based on the environment parameter (so as to adapt the hearing processing to the environment or context of the hearing device).

The method 100 may comprise classifying 122 the one or more input signals based on the environment parameter (e.g. in a hearing processing database, in a memory of the hearing device, in a memory of the accessory device).

The method 100 comprises in accordance with the environment parameter satisfying the one or more first criteria, obtaining 106 a processing context parameter, and selecting 108 a first hearing processing scheme based on the processing context parameter (e.g. a parameter indicative of a hearing processing context to be used by the hearing device, such as indicative of the hearing processing scheme to be applied). The processing context parameter may reflect user preferences in terms of the desirability of sound sources with respect to the environment parameter. Obtaining 106 the processing context parameter may comprise receiving and/or retrieving the processing context parameter based on the environment parameter, e.g. from a memory unit of the hearing device, from an accessory device paired with the hearing device, from a server configured to connect to the hearing device. The processing context parameter may comprise a noise cancellation scheme identifier, and/or a prioritization scheme identifier, and/or one or more output signal indicators indicative of one or more output signals to be output by the hearing device. A noise cancellation scheme identifier may refer to an identifier uniquely identifying a noise cancellation scheme. A prioritization scheme identifier may refer to an identifier uniquely identifying a prioritization scheme. The one or more output indicators are indicative of one or more output signals (e.g. an alert sound, an alarm sound, a streamed signal) to be output by the hearing device, such as by the receiver.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly to be regarded in an illustrative rather than restrictive sense. The claimed invention is intended to cover all alternatives, modifications, and equivalents.

LIST OF REFERENCES

2       hearing device
4       antenna
5       first wireless input signal
6       radio transceiver
7       transceiver input signal
7A      pre-processed transceiver input signal
8       first microphone
9       first microphone input signal
9A      pre-processed first microphone input signal
10      second microphone
11      second microphone input signal
11A     pre-processed second microphone input signal
12      pre-processing unit
14      processor
15      electrical output signal
16      receiver
18      memory unit

100 method of operating a hearing device

102 obtaining the environment parameter may comprise receiving a wireless input signal, and determining the environment parameter based on the wireless input signal

102A obtaining an input signal

102B determining the environment parameter based on the input signal

104 determining whether the environment parameter satisfies the one or more first criteria

104A determining whether the environment parameter satisfies the location criterion

104AA determining whether the environment parameter is indicative of a location that is comprised in a geographic area present in a hearing processing database

104B determining whether the environment parameter satisfies a time criterion

106 obtaining a processing context parameter

108 selecting a first hearing processing scheme based on the processing context parameter

110 applying the first hearing processing scheme

112 obtaining one or more input signals

114 recording at least a part of the one or more input signals

114A storing the at least a part of the one or more input signals

115 reporting to the hearing processing database after recording

116 determining a noise parameter based on at least a part of the one or more of input signals

118 selecting a second hearing processing scheme based on the noise parameter

120 applying the second hearing processing scheme to input signals

122 classifying the one or more input signals based on the environment parameter

**Claims**

**1.** A method, performed in a hearing device, for operating the hearing device, the method comprising:

- obtaining an environment parameter;
- determining whether the environment parameter satisfies one or more first criteria,
- in accordance with the environment parameter satisfying the one or more first criteria, obtaining a processing context parameter;
- selecting a first hearing processing scheme based on the processing context parameter; and
- applying the selected first hearing processing scheme to input signals of the hearing device.

**2.** Method according to claim 1, wherein the one or more first criteria comprise a location criterion, wherein determining whether the environment parameter satisfies the one or more first criteria comprises determining whether the environment parameter satisfies the location criterion.

**3.** Method according to claim 2, wherein determining whether the environment parameter satisfies the location criterion comprises determining whether the environment parameter is indicative of a location that is comprised in a geographic area present in a hearing processing database.

**4.** Method according to any of the previous claims, the method comprising obtaining one or more input signals.

**5.** Method according to claim 4, the method comprising, in accordance with the environment parameter not satisfying the one or more first criteria, recording at least a part of the one or more input signals.

**6.** Method according to any of claims 4-5, the method comprising: in accordance with the environment parameter not satisfying at least one of the one or more first criteria, storing at least a part of the one or more input signals and/or one or more parameters characterising at least a part of the one or more input signals.

**7.** Method according to any of claim 4-6, the method comprising: in accordance with the environment parameter not satisfying the one or more first criteria, determining a noise parameter based on at least a part of the one or more of input signals, selecting a second hearing processing scheme based on the noise parameter; and applying the second hearing processing scheme to input signals.

**8.** Method according to any of the previous claims, wherein the first hearing processing scheme comprises a noise cancellation scheme, and/or an input signal prioritization scheme.

**9.** Method according to any of the previous claims, wherein obtaining the environment parameter comprises obtaining an input signal, and determining the environment parameter based on the input signal.

**10.** Method according to any of the previous claims, the method comprising classifying the one or more input signals based on the environment parameter.

**11.** Method according to any of the previous claims, wherein the environment parameter comprises a location parameter and/or an environment type parameter.

**12.** Method according to any of the previous claims, wherein the processing context parameter comprises a noise cancellation scheme identifier, and/or a convolutive blind source separation a convolutive blind source separation a convolutive blind source separation a convolutive blind source separation a convolutive blind source separation a convolutive blind source separation a prioritization scheme identifier, and/or one or more output signal indicators indicative of one or more output signals to be output by the hearing device.

**15.** A hearing device comprising a memory, an interface, a processor configured to compensate for hearing loss, a receiver, and one or more microphones, wherein the hearing device is configured to perform any of the methods according to claim 1-12.

**Fig. 1**

100

102

| 102A | OBTAINING | 102B |

104

| DETERMINING |
| 104A |
| 104AA | 104B |

106

OBTAINING

108

SELECTING

110

APPLYING

112

OBTAINING

# Fig. 2A

**Fig. 2B**

Europäisches
Patentamt

European
Patent Office

Office européen
des brevets

# EUROPEAN SEARCH REPORT

Application Number

EP 18 19 3159

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/230788 A1 (SIMONIDES TED [US] ET AL) 10 August 2017 (2017-08-10)<br>* paragraph [0012] - paragraph [0016] *<br>* paragraph [0036] - paragraph [0037]; figure 2 *<br>* paragraph [0038] - paragraph [0045]; figure 3 *<br>* paragraph [0046] - paragraph [0054]; figure 4 *<br>* paragraph [0055] - paragraph [0057]; figure 6 * | 1-12,15 | INV.<br>H04R25/00 |
| X | DE 10 2014 207311 A1 (SIEMENS MEDICAL INSTR PTE LTD [SG])<br>5 March 2015 (2015-03-05) | 1-4, 6-12,15 | |
| A | * claim 1 *<br>* paragraph [0017] - paragraph [0019] *<br>* paragraph [0048] - paragraph [0050] *<br>* paragraph [0067] - paragraph [0075]; figure 4 *<br>* paragraph [0076] - paragraph [0081]; figure 5 * | 5 | |
| X | US 2015/003652 A1 (BISGAARD NIKOLAI [DK] ET AL) 1 January 2015 (2015-01-01)<br>* paragraph [0013] - paragraph [0021] *<br>* paragraph [0041] - paragraph [0056] *<br>* paragraph [0057] - paragraph [0059] *<br>* paragraph [0110] - paragraph [0114] * | 1-12,15 | TECHNICAL FIELDS SEARCHED (IPC)<br>H04R |
| A | US 2017/280257 A1 (GORDON MICHAEL S [US] ET AL) 28 September 2017 (2017-09-28)<br>* paragraph [0054] * | 12 | |

The present search report has been drawn up for all claims

| Place of search | Date of completion of the search | Examiner |
|---|---|---|
| Munich | 7 March 2019 | Guillaume, Mathieu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 18 19 3159

This annex lists the patent family members relating to the patent documents cited in  the above-mentioned European search report.
The members are as contained in the European Patent Office EDP file on
The European Patent Office is in no way liable for these particulars which are merely given for the purpose of information.

07-03-2019

| Patent document cited in search report | Publication date | Patent family member(s) | Publication date |
|---|---|---|---|
| US 2017230788 A1 | 10-08-2017 | NONE | |
| DE 102014207311 A1 | 05-03-2015 | NONE | |
| US 2015003652 A1 | 01-01-2015 | NONE | |
| US 2017280257 A1 | 28-09-2017 | NONE | |

EPO FORM P0459

For more details about this annex : see Official Journal of the European Patent Office, No. 12/82